# EUROPÄISCHE PATENTANMELDUNG

(11) **EP 1 190 889 A2**
(43) Veröffentlichungstag der Anmeldung: **27.03.2002**
(21) Anmeldenummer: 01122719.6
(22) Anmeldetag: 21.09.2001
(51) Int. Cl.: B60L 3/10

(54) **Vorrichtung und Verfahren zur Traktionsregelung**

(30) Priorität: 23.09.2000 DE 10047249
(71) Anmelder: DaimlerChrysler Rail Systems GmbH, 13627 Berlin (DE)
(72) Erfinder: Kernen, Roland, 8006 Zürich (CH)
(74) Vertreter: Thielmann, Andreas

(57) **Zusammenfassung**

Zusammenfassend offenbart die vorliegende Erfindung eine Vorrichtung und ein Verfahren zur Traktionsregelung, mit deren bzw. dessen Hilfe vor allem die Abnutzung der Laufflächen der Räder aufgrund von erhöhtem Schlupf im Winterbetrieb bedeutend verringert wird. Hierzu ist ein automatisches Sandesystem ausgebildet, das ansprechend auf erfasste Witterungs- und Fahrbedingungen geregelt wird und somit eine Verringerung des Schlupfes zur Folge hat.

## Beschreibung

Die vorliegende Erfindung bezieht sich auf das Gebiet der Traktionsregelung, insbesondere auf eine Vorrichtung und ein Verfahren zur Traktionsregelung für Schienenfahrzeuge.

Die Energie wird der Fahrleitung entnommen. Diese elektrische Energie dient zur Betätigung einer Vielzahl von Asynchron-Traktionsmotoren, von denen jeder eine separate Antriebsachse mit einem Paar von damit verbundenen Antriebsrädern antreibt.

Während einer Beschleunigung tritt gewöhnlich ein Radschlupf auf und kann zwei verschiedenen Formen annehmen. Die erste Form, die als differentieller Radschlupf bezeichnet wird, tritt auf, wenn zumindest ein Satz von Antriebsrädern in Traktionskontakt mit der Schiene bleibt, während zumindest ein Satz der verbleibenden Antriebsräder gleitet bzw. rutscht. Eine zweite Form von Radschlupf ist ein synchroner Schlupf, der auftritt, wenn keines der Antriebsräder in Traktionskontakt mit der Schienen bleibt und alle Antriebsräder mehr oder weniger gleichzeitig rutschen.

Radschlupf war lange Zeit ein Problem bei Lokomotiven und es wurden viele Systeme entwickelt, die den Radschlupf entweder verringern oder vollständig beseitigen. Ein herkömmliches Schema vergleicht dabei Geschwindigkeitssignale von angetriebenen und nicht angetriebenen Rädern oder Geschwindigkeitssignale von jedem von einer Vielzahl von angetriebenen Rädern oder höchste und niedrigste Geschwindigkeitssignale von Traktionsmotoren. Es wird hierbei angenommen, dass ein Schlupfzustand vorliegt, wenn sich die verglichenen Geschwindigkeitssignale um mehr als einen vorbestimmten Wert voneinander unterscheiden. In der vorstehend erwähnten Systemen werden Sensoren, wie beispielsweise Geschwindigkeits-Messwandler verwendet, um die Geschwindigkeitssignale zu erzeugen. Derartige Sensoren erhöhen jedoch die Kosten für Radschlupfregelsysteme.

Ein Beispiel für ein Radschlupfregelsystem unter Verwendung von Geschwindigkeitssensoren ist im US-Patent Nr. 4,463,289, erteilt am 31. Juli 1984 offenbart. Dort werden die Geschwindigkeiten einzelner Antriebsräder erfasst und es wird ansprechend auf einen Unterschied zwischen der höchsten und der niedrigsten erfassten Radgeschwindigkeit ein Differenzsignal erzeugt. Das Differenzsignal wird dann mit einem Schlupf-Bezugssignal verglichen, um ein Rutschsignal zu erzeugen, das zur Regelung der Generatorausgabe verwendet wird. Das Schlupf-Bezugssignal stellt ein Ausmass von Radschlupf dar, bei dem eine maximale Haftung auftritt. Wenn ein Rad beginnt zu rutschen, steigt das Differenzsignal an. Dies erhöht das Schlupfsignal, was zu einer Verringerung der Generatorleistung führt.

Aus der EP 0 419 578 B1 ist eine Vorrichtung und ein Verfahren zur Steuerung des differentiellen Radschlupfes einer Lokomotive mit einer Vielzahl von elektrischen Fahrmotoren bekannt, bei dem keine Geschwindigkeitssensoren erforderlich sind. Bei dieser Vorrichtung bzw. diesem Verfahren ist eine differentielle Schlupfsteuereinrichtung ausgebildet, die, wenn sich ein Motorstrom-Delta-Signal und ein verzögertes Motorstrom-Delta-Signal um mehr als einen vorgegebenen Wert unterscheiden, die Grösse eines Ansprech-Schleifenstrombegrenzungssignals beschränkt.

Bei der Lokomotive VRSR2 in Finnland wurde dennoch festgestellt, dass immer noch eine hohe Radabnutzung auftritt, und zwar eine Radialabnutzung auf der Lauffläche im Bereich von über 10mm bei 100.000 km Laufstrecke. Zusätzlich kann es auch zu einer Entstehung von Rissen auf den Laufflächen kommen, die das zulässige Mass wesentlich überschreiten.

Die Abnutzung der Lauffläche resultiert aus der Schlupfarbeit zwischen Rad und Schiene über einen sehr langen Zeitraum. Die teilweise auch auftretenden Risse in den Laufflächen resultieren aus einem zu grossen Energieeintrag der Schleuderbremse auf das Rad.

Die vorstehend erwähnte erhöhte Abnutzung der Lauffläche aufgrund einer erhöhten Schlupfarbeit zwischen Rad und Schiene tritt vor allem im Winter, beispielsweise aufgrund von Flugschnee auf. Flugschnee ist ein Phänomen, dass im Winter häufiger auftreten kann und sehr grossen Einfluss auf das Traktionsverhalten von Triebfahrzeugen hat und somit auch auf die Radabnutzung. Flugschnee ist hierbei weniger eine Schneeverfrachtung durch den Wind als der durch den Sog des Fahrzeugs aufgewirbelte Schnee, der durch einen Unterdruck unter dem Fahrzeug unter die Triebachsen gesogen wird.

Durch das Aufwirbeln von Schnee geht ein Konditionierungseffekt, der eine Zunahme der übertragbaren Zugkraft für die nachlaufenden Achsen bewirkt, vollständig verloren. Dadurch ergibt sich eine rein stochastische Verteilung der übertragbaren Zugkräfte pro Achse. Hierbei ist abhängig von der Fahrsituation und den Verhältnissen jede Kombination möglich. Auf häufigsten ist jedoch die Situation, dass die Verhältnisse an den hinteren Achsen schlechter sind als an den vorlaufenden.

Die Kraftschlusscharakteristiken, die beim Auftreten von Flugschnee beobachtet werden können, sind meistens sehr flach und ohne ein ausgeprägtes Maximum. Hierbei sind Extremfälle von 5 bis 7 km/h Schlupf für 15kN Zugkraft an einer Achse keine Seltenheit, die zu einer unerwünschten Abnutzung der Räder führt.

Daher ist es Aufgabe der vorliegenden Erfindung, eine Vorrichtung sowie ein Verfahren zur Traktionsregelung auszubilden, mit der bzw. dem unabhängig von unterschiedlichen Verhältnissen im Winter und im Sommer ein akzeptabler Abnutzungsgrad der Laufflächen erreicht sowie ein Fahren an der Traktionsgrenze unter erschwerten Winterbedingungen ermöglicht wird.

Erfindungsgemäss wird diese Aufgabe durch die in Patentanspruch 1 bzw. ? angegebenen Merkmale gelöst. In den Unteransprüchen sind vorteilhafte Weiterbildungen der Erfindung angegeben.

Durch die erfindungsgemässe Vorrichtung sowie das erfindungsgemässe Verfahren zur Traktionsregelung wird insbesondere erreicht, dass die Regelung für verschiedene Witterungsbedingungen, wie beispielsweise verschiedene Temperaturbereiche, nach Sommer- und Winterbetrieb unterschieden wird und der Schlupf der einzelnen Räder erfasst und entsprechend der jeweiligen Betriebsart geregelt wird. Auf diese Weise wird eine überproportionale Abnutzung der Laufflächen beim Winterbetrieb zuverlässig verhindert. Darüber hinaus wird durch eine vorteilhafte Weiterbildung der Erfindung, die eine Einrichtung zur Regelung der Schleuderbremse aufweist, der Energieeintrag auf das jeweilige Rad verringert und damit die Bildung von Rissen in der Lauffläche verhindert.

Diese und weitere Aufgaben, Vorteile und Merkmale der vorliegenden Erfindung werden aus der nachfolgenden Beschreibung eines bevorzugten Ausführungsbeispiels in Verbindung mit der Zeichnung offensichtlich.

Es zeigen:
- Fig. 1: ein Blockschaltbild einer erfindungsgemässen Vorrichtung zur Traktionsregelung,
- Fig. 2a und 2b: die Funktion des Fuzzy-Control-Systems 1b aus Fig. 1,
- Fig. 3: die Funktion der Freigabeeinrichtung 2 aus Fig. 1 und
- Fig. 4a und 4b: die Funktion des Steuereinrichtung 12 aus Fig. 1.

Erfindungsgemäss wird eine Vorrichtung sowie ein Verfahren zur Traktionsregelung ausgebildet, mit dem sichergestellt wird, dass auch bei ungünstigen Wetterverhältnissen, d.h. bei Temperaturen um oder unter 0°C und dem Auftreten von Flugschnee keine erhöhte Abnutzung der Laufflächen der Räder aufgrund erhöhter Schlupfarbeit zwischen Rad und Schiene auftritt.

Da prinzipiell bei Lokomotiven und Triebwagen die Verlustleistung zwischen Rad und Schiene für eine erhöhte Abnutzung der Laufflächen der Räder verantwortlich ist, soll erfindungsgemäss durch Verringerung dieser Verlustleistung auch die Abnutzungsrate verringert werden.

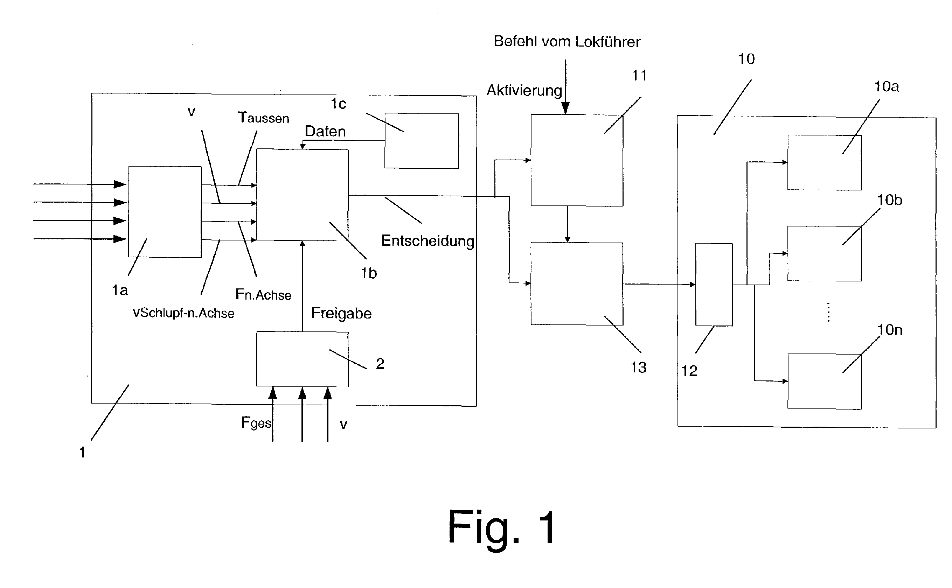

Die Verlustleistung zwischen Rad und Schiene ergibt sich aus der Schlupfgeschwindigkeit multipliziert mit der übertragenen Zugkraft. Da das Zugkraftniveau erhalten bleiben soll, kann lediglich der Schlupf bzw. die Schlupfgeschwindigkeit zur Verringerung der Verlustleistung verwendet werden. Durch die Rad-Schienenphysik sind die Grössen Schlupf bzw. Schlupfgeschwindigkeit und Zugkraft jedoch direkt voneinander abhängig. Daher wird erfindungsgemäss durch Massnahmen von aussen Einfluss auf den Schlupf bzw. die Schlupfgeschwindigkeit genommen. Aus diesem Grund wurde ein erfindungsgemässes Vorrichtung und ein Verfahren zur Traktionsregelung entwickelt, bei der bzw. dem ein automatisches Sandesystem 10 mit einer Vielzahl von Einrichtungen zum Sanden 10a, 10b, ..., 10n zur Anwendung kommt. Eine derartige erfindungsgemässe Vorrichtung zur Traktionsregelung ist in Fig. 1 in Form eines Blockschaltbilds gezeigt.

Zunächst umfasst die erfindungsgemässe Vorrichtung eine Einrichtung 1 zur Detektion der Wetterverhältnisse. Vorteilhafterweise weist diese Einrichtung 1 zur Detektion der Wetterverhältnisse erfindungsgemäss ein Fuzzy-Control-System 1b auf. Dieses Fuzzy-Control-System 1b entscheidet anhand von durch eine Erfassungseinrichtung 1a erfassten Zugkräften F_{n.Achse} der jeweiligen Achse n (n= 1 bis maximale Anzahl der Achsen) und deren Verhalten untereinander, den Schlupfgeschwindigkeiten pro Achse V_{Schlupf/n.Achse} (n=1 bis maximale Anzahl der Achsen), der Zuggeschwindigkeit v und der Aussentemperatur Tₐᵤₛₛₑₙ nach welcher Strategie gefahren wird. Für diese Entscheidung werden anhand von Messdaten und Testfahrten bei unterschiedlichen Verhältnissen ermittelte, in einer Speichereinrichtung 1c gespeicherte Daten verwendet.

Abhängig von der Entscheidung durch das Fuzzy-Control-System 1b in der Einrichtung zur Detektion der Wetterverhältnisse 1 wird das automatische Sandesystem 10 mit seinen Einrichtungen 10a, 10b, ... zum automatischen Sanden angesteuert, die an den Drehgestell vorlaufenden Achsen ausgebildet sind und deren Einsatz einen wesentlichen Einfluss auf das Schlupfverhalten hat.

Im folgenden wird nun zunächst das erfindungsgemässe Fuzzy-Control-System 1b genauer beschrieben.

Die Entscheidung, welche Wetterverhältnisse vorliegen, erfolgt durch das in der Einrichtung zur Detektion der Wetterverhältnisse 1 enthaltene Fuzzy-Control-System 1b, das anhand von verschiedenen, nachstehend genauer definierten Regeln 1 bis 4. Anhand dieser Regeln 1 bis 4 entscheidet das Fuzzy-Control-System 1b in Verbindung mit vorbestimmten Grenzwerten, welche Betriebsart Winterbetrieb B_{Winter} oder Sommerbetrieb B_{Sommer} gewählt wird. Die Betriebsart Winterbetrieb B_{Winter} ist eine Betriebsart für Flugschnee und flugschneeähnliche Bedingungen, wie sie sehr häufig im Winter auftreten. Dahingegen ist die Betriebsart Sommerbetrieb B_{Sommer} eine "normale" Betriebsart, d.h. eine Betriebsart ohne Berücksichtigung von Sonderverhältnissen.

Die durch das Fuzzy-Control-System 1b verwendeten Regeln 1 bis 4 zur Entscheidung, welche der beiden Betriebsarten Winterbetrieb B_{Winter} oder B_{Sommer} verwendet wird, lauten folgendermassen:
- Regel 1:: Bei tiefen Temperaturen Tₐᵤₛₛₑₙ um 0°C oder tiefer und, wenn die maximale Schlupfgeschwindigkeit v_{Schlupfmax} am nachlaufenden Drehgestell D_{nach} grösser als die minimale Schlupfgeschwindigkeit v_{Schlupfmin} am vorlaufenden Drehgestell Dᵥₒᵣ ist, wird entschieden, dass Winterverhältnisse vorliegen und daher die Betriebsart B_{Winter} zu verwenden ist (E3).
- Regel 2:: Bei tiefen Temperaturen Tₐᵤₛₛₑₙ um 0°C oder tiefer und, wenn die 2. Achse in Fahrtrichtung mehr Zugkraft macht als die 4. Achse in Fahrtrichtung (F_{2.Achse} > F_{4.Achse}), wird entschieden, dass Winterverhältnisse vorliegen und daher die Betriebsart B_{Winter} zu verwenden ist (E3).
- Regel 3:: Wenn die Temperatur positiv ist, d.h. Tₐᵤₛₛₑₙ um 0°C oder höher, wird entschieden, dass Sommerverhältnisse vorliegen und daher die Betriebsart B_{Sommer} zu verwenden ist (E2).
- Regel 4:: Es wird entschieden, dass Sommerverhältnisse vorliegen und daher die Betriebsart B_{Sommer} zu verwenden ist (E2), wenn die Zuggeschwindigkeit v eine vorbestimmte Geschwindigkeit v₁, ab der üblicherweise Flugschnee auftritt, erreicht oder überschritten hat und die Summenzugkraft des nachlaufenden Drehgestells Fₛᵤₘ(D_{nach}) grösser als die Summenzugkraft des vorlaufenden Drehgestells Fₛᵤₘ(Dᵥₒᵣ) ist und die 4. Achse in Fahrtrichtung mehr Zugkraft macht als die 3. Achse in Fahrtrichtung (F_{4.Achse} > F_{3.Achse}).

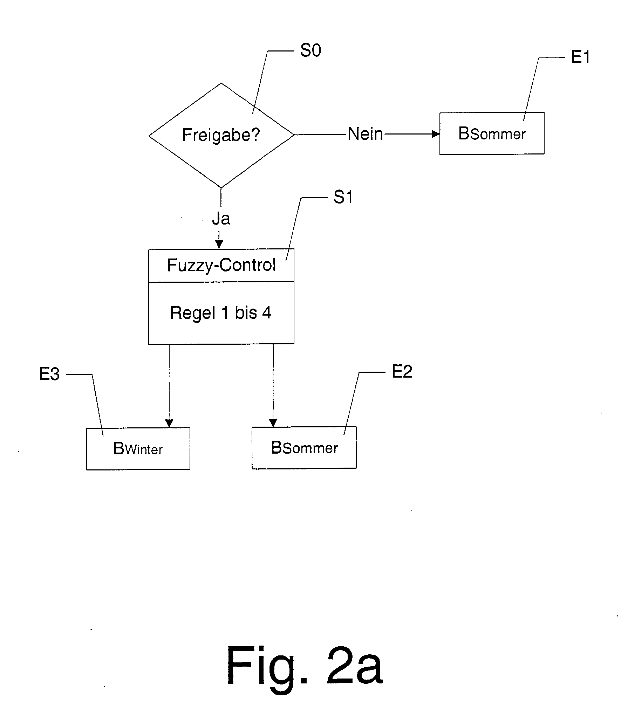

In Fig. 2a ist gezeigt, dass das Fuzzy-Control-System 1b nur im Fall einer Freigabe (S0) anhand der Regeln 1 bis 4 entscheidet (S1), ob die Betriebsart B_{Winter} oder B_{Sommer} zu wählen ist (E3 bzw. E2). Selbstverständlich ist für den Fachmann offensichtlich, dass ebenfalls eine andere Anzahl von Regeln bzw. andere Regelinhalte verwendet werden können.

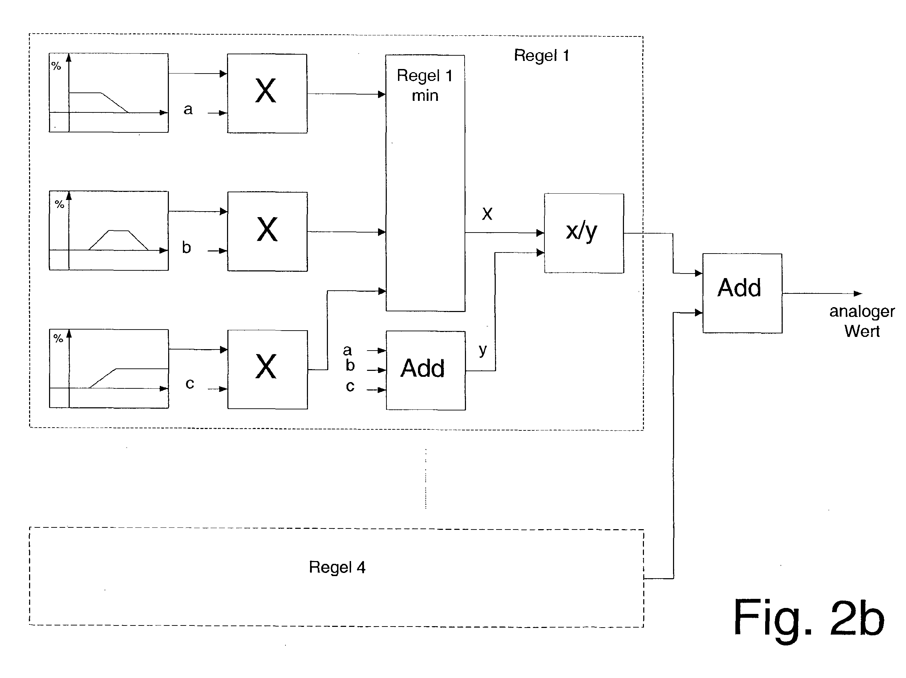

Die Entscheidung des Fuzzy-Control-Systems 1b (S1) ist in Fig.2b genauer dargestellt. Hierbei wird zur Vereinfachung nur die Entscheidung für Regel 1 detailliert dargestellt. Für die Regeln 2 bis 4 erfolgt die Entscheidung entsprechend. Es wird eine Fuzzy-Center of Gravity-Methode angewandt.

In Fig. 2b sind zunächst Membership-Funktionen für vorgegebene Bedingungen gezeigt, die über eine Multiplikation mit Faktoren a, b bzw. c gewichtet werden. Der jeweilige Prozentsatz der Membership-Funktion sagt hierbei aus, zu wieviel Prozent die zugehörige Bedingung zutrifft.

Die gewichteten Ausgangssignale der Membership-Funktion werden dann einer Einrichtung zugeführt, in der der Minimalwert x der Ausgangssignale ermittelt wird. Dieser Minimalwert wird anschliessend durch die Summe y der Faktoren a, b und c dividiert, um ein normiertes Ergebnissignal von Regel 1 zu erhalten.

Ebenso erfolgt die Ergebnissignalermittlung für die Regeln 2 bis 4. Aus diesen Ergebnissignalen der Regeln 1 bis 4 wird dann durch eine Additionseinrichtung ein analoger Wert ermittelt, der ausgegeben wird, und durch den festgelegt ist, ob die Betriebsart B_{Winter} oder B_{Sommer} gewählt wird.

Eine Entscheidung durch das Fuzzy-Control-System 1b erfolgt nur, d.h. wenn eine Freigabe des Fuzzy-Control-Systems 1b durch eine Freigabelogik 2 erfolgt ist (S0). Die Freigabe durch die Freigabelogik 2 erfolgt nur bei bestimmten Bedingungen, für deren Entscheidung das Fuzzy-Control-System 1b ausgelegt und eingestellt ist. Für die Funktion dieser Freigabelogik 2 müssen auch Daten zwischen den Drehgestellen Dᵥₒᵣ, D_{nach} ausgetauscht werden, um möglichst viele unterschiedliche Situationen erfassen zu können.

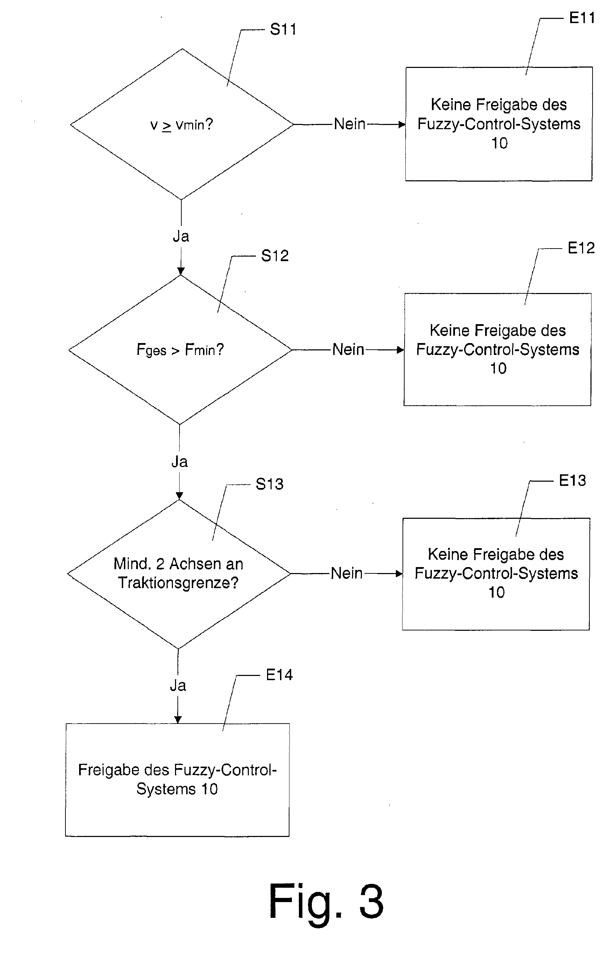

Die Bedingungen für die Freigabe des Fuzzy-Control-Systems 1b durch die Freigabelogik 2 sind in Fig. 3 dargestellt und lauten folgendermassen:
- Der Zug muss eine vorbestimmte Mindestgeschwindigkeit Vₘᵢₙ erreicht haben, die wie in Regel 4 festgelegt, v₁ entspricht und ca. 40 bis 50 km/h beträgt (S11). Diese Bedingung ist erforderlich, um ein Fehlansprechen zu vermeiden, da Flugschnee ein Phänomen ist, das durch das aerodynamische Verhalten der Lokomotive hervorgerufen wird.
- Die Gesamtzugkraft F_{ges} muss über einem bestimmten Wert Fₘᵢₙ liegen, wobei diese Wert Fₘᵢₙ, ab dem Schleudern möglich ist, ca. 60 kN beträgt (S12).
- Mindestens zwei Achsen müssen an der Traktionsgrenze fahren, d.h. die Traktionsregelung muss an mindestens zwei Achsen aktiv sein (S13). Diese beiden Achsen können beliebige Achse sein. Für diese Detektion ist es notwendig, Signale für die Traktionsregelung aktiv zwischen den Drehgestellen D_{nach} und Dᵥₒᵣ auszutauschen, um eine einheitliche Detektion beider Drehgestelle D_{nach}, Dᵥₒᵣ zu gewährleisten.

Wenn alle vorstehenden Bedingungen erfüllt sind, gibt die Freigabelogik 2 das Fuzzy-Control-System 1b frei (E14), so dass dieses entscheiden kann, ob Sommer- oder Winterverhältnisse vorliegen und daher die Betriebsart Sommer- oder Winterbetrieb B_{Sommer} oder B_{Winter} gewählt wird (siehe Fig. 2). In Fällen, in denen nicht alle vorstehend aufgeführten Bedingungen erfüllt sind, ist es unnötig zu entscheiden, ob Sommer- oder Winterverhältnisse vorliegen, dann wird das Fuzzy-Control-System 10 nicht freigegeben (E11, E12, E13) und die Betriebsart Sommerbetrieb B_{Sommer} wird beibehalten.

Wenn das Fuzzy-Control-System 1b durch die Freigabelogik 2 freigegeben ist (S0) und aufgrund der durch die Erfassungseinrichtung 1a erfassten Daten entschieden hat, dass die Betriebsart Winterbetrieb B_{Winter} zu wählen ist (E3), steuert das Fuzzy-Control-System 1b das automatische Sandesystem 10 mit den Einrichtungen zum automatischen Sanden 10a, 10b, ..., 10n an.

Dieses automatische Sandesystem 10 ist aus dem folgenden Grund ausgebildet: Durch Flugschnee entstehen sehr flache Kraftschlusscharakteristiken. Bedingt durch diese flachen Charakteristiken müssen bereits für kleine Zugkräfte mittlere bis grosse Schlüpfe bzw. Schlupfgeschwindigkeiten V_{Schlupf} gefahren werden. Daher ist das automatische Sandesystem 10 mit den Einrichtungen zum automatischen Sanden 10a, 10b, ..., 10n ausgebildet, um durch das Sanden diese Charakteristik steiler zu machen und gleichzeitig das Kraftschlussmaximum zu erhöhen.

Jedoch bringt die Ausbildung von Einrichtungen zum automatischen Sanden 10a, 10b, .., 10n die folgenden Probleme mit sich:
- Der Sandbehälter jeder Einrichtung zum automatischen Sanden 10a, 10b, ..., 10n verfügt nur über einen relativ begrenzten Inhalt. Daher ist es wichtig, dass der Sand möglichst sparsam dosiert wird, damit die Sandmenge bis zur nächsten Nachfüllstation reicht.
- Über einer Weiche darf nicht gesandet werden, da dies den Weichenmechanismus unnötig verschmutzt und somit den Wartungsaufwand erhöht.
- Durch den schnellen Wechsel der Kraftschlusscharakteristik beim Sanden können mechanische Schwingungen angeregt werden; insbesondere treten vermehrt Torsionsschwingungen der Achse (Rollieren) auf.

Um diese Probleme zu umgehen, sind die nachfolgend genauer beschriebenen Vorkehrungen getroffen.
Wie in Fig. 1 gezeigt, wird das automatische Sandesystem 10 wird den Lokführer ein-und ausgeschaltet. Dem Einschaltbefehl des Lokführers wird jedoch nur Folge geleistet, d.h. das automatische Sandesystem 10 mit den Einrichtungen zum automatischen Sanden 10a, 10b, ..., 10a wird nur dann aktiviert, wenn gleichzeitig eine Detektionseinrichtung 11 erfasst hat, dass das Ausgangssignal des Fuzzy-Control-Systems 1 b anzeigt, dass Winterverhältnisse vorliegen und als Betriebsart die Winterbetriebsart B_{Winter} auszuwählen ist. Diese Detektion durch die Detektionseinrichtung 11 ist erforderlich, da ein Übergang Sand/kein Sand bei Regenwetter wesentlich schwerer beherrschbar ist und es deshalb vermehrt zu Torsionsschwingungen der Achse kommt. Gesandet wird im Fall einer Aktivierung des automatischen Sandesystems 10, d.h. im Fall einer Ausgangssignals des Fuzzy-Control-Systems 1b der Betriebsart B_{Winter}, einer Aktivierung durch den Lokführer sowie einer Aktivierung durch eine Steuereinrichtung 12 in dem automatischen Sandesystem 10 grundsätzlich von allen Einrichtungen zum automatischen Sanden 10a, 10b, ..., 10n gleichzeitig.

Ansprechkriterium für das automatische Sandesystem 10, respektive eine darin enthaltene Steuereinrichtung 12, die die jeweiligen Einrichtungen zum automatischen Sanden 10a, 10b, ..., 10n ansteuert, ist der gefahrene Schlupf bzw. die Schlupfgeschwindigkeit v_{Schlupf}. Die Steuereinrichtung 12 entscheidet im Fall eines Einschaltsignals von einer Schalteinrichtung 13, die ansprechend auf ein die Betriebsart B_{Winter} anzeigendes Ausgangssignal des Fuzzy-Control-Systems 1b und ein Aktivierungssignal des Lokführers, das durch die Detektionseinrichtung 11 freigegeben wird, ob die vorbestimmte Bedingungen zum Einschalten der Einrichtungen zum automatischen Sanden 10a, 10b, .., 10n erfüllt sind.

Dabei werden zwei unterschiedliche Schwellen v_{Schlupf-th1}, v_{Schiupf-th2} überwacht. Messgrösse ist der maximale Schlupf bzw. die maximale Schlupfgeschwindigkeit v_{Schlupfmax} aller Achsen. Beim Überschreiten der ersten Schwelle v_{Schlupf-th1}, die beispielsweise 1,5 bis 2 km/h beträgt, steuert die Steuereinrichtung 12 die Einrichtungen zum automatischen Sanden 10a, 10b, ... derart an, dass mit impulsweisem Sanden begonnen wird. Wenn die zweite Schwelle v_{Schlupf-th2} überschritten wird, die höher als die erste liegt und beispielsweise bei 200% von v_{Schlupf-th1} gewählt ist, wird das automatische Sandesystem 10 durch die Steuereinrichtung 12 auf Dauersanden umgestellt.

Weiterhin wird, um den Sandverbrauch in Griff zu bekommen, intervallweise gesandet. Dabei werden die Intervalle durch die Steuereinrichtung 12 derart gewählt, dass die Kraftschlusscharakteristik nicht zu grosse Sprünge macht, was die Regelung negativ beeinflussen würde. Hierzu werden der Steuereinrichtung 12 zusätzlich Signale zugeführt, die über die Kraftschlusscharakteristik informieren, z.B., Zugkraftverläufe.

Um das Sanden von Weichen zu verhindern bzw. zu reduzieren, wird das automatische Sandesystem 10 durch die Steuereinrichtung 12 bis zu einer Geschwindigkeit v₂ von beispielsweise 40 km/h gesperrt, da dies die Geschwindigkeit ist, mit der die meisten Weichen überfahren werden (beispielsweise im Bahnhofsbereich, auf Rangierfeldern). Ab 40 km/h ist das automatische Sandesystem 10 durch die Steuereinrichtung 12 freigegeben, kann jedoch jederzeit vom Lokführer ausgeschaltet werden.

Durch diese vorstehend beschriebene Vorrichtung sowie das Verfahren zur Traktionsregelung kann somit sichergestellt werden, dass unabhängig von der Witterungsbedingungen ein Schlupf zwischen Rad und Schiene eingestellt wird, der eine geringstmögliche Abnutzung der Lauffläche verursacht.

In einer bevorzugten Weiterbildung der Erfindung wird zusätzlich sichergestellt, dass auch keine negativen Auswirkungen aufgrund von Rollieren auftreten. Rollieren tritt bevorzugt beim Überschreiten von relativ steilen und spitzen Kraftschlusskurven auf. Solche Charakteristiken sind typisch für feuchte und leicht regennasse Schienen. Falls durch den Einsatz von Sand solche kritischen Verhältnisse erzeugt werden, kann dies zu starken Schwingungen führen, die im betriebsmässigen Einsatz nicht zulässig sind. Bei Flugschnee und Schneefall treten jedoch meist relativ flache Kraftschlussverläufe auf, die durch den Einsatz von Sand nicht so stark verändert werden, dass es kritisch wird.

Um aber allgemein zu verhindern, dass Rollieren im Fall des Einsatzes des automatischen Sandesystems 10 auftritt, wird beim Einsatz des automatischen Sandesystems 10 zusätzlich der maximal zulässige Schlupf reduziert. Ausserdem wird das automatische Sandesystem 10, wie vorstehend beschrieben, durch das Fuzzy-Control-System 1b nur bei Flugschneeverhältnissen freigegeben. Da darüber hinaus das automatische Sandesystem 10 auch bis 40 km/h gesperrt ist, wird der Bereich, in beim Sanden dem Rollieren am häufigsten auftreten könnte, durch Blockierung des Sandens ausgeschlossen.

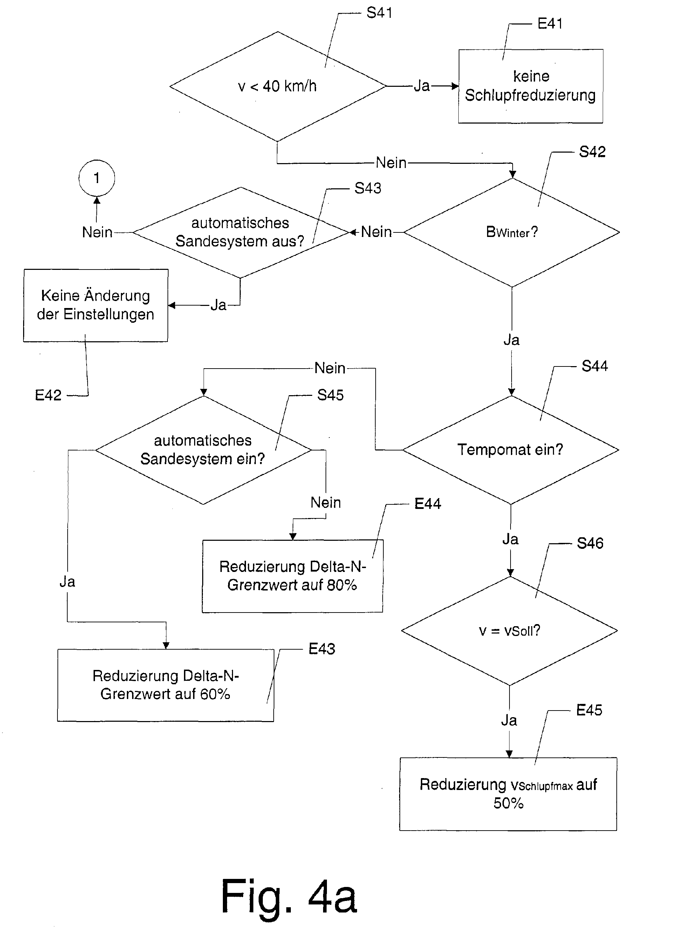

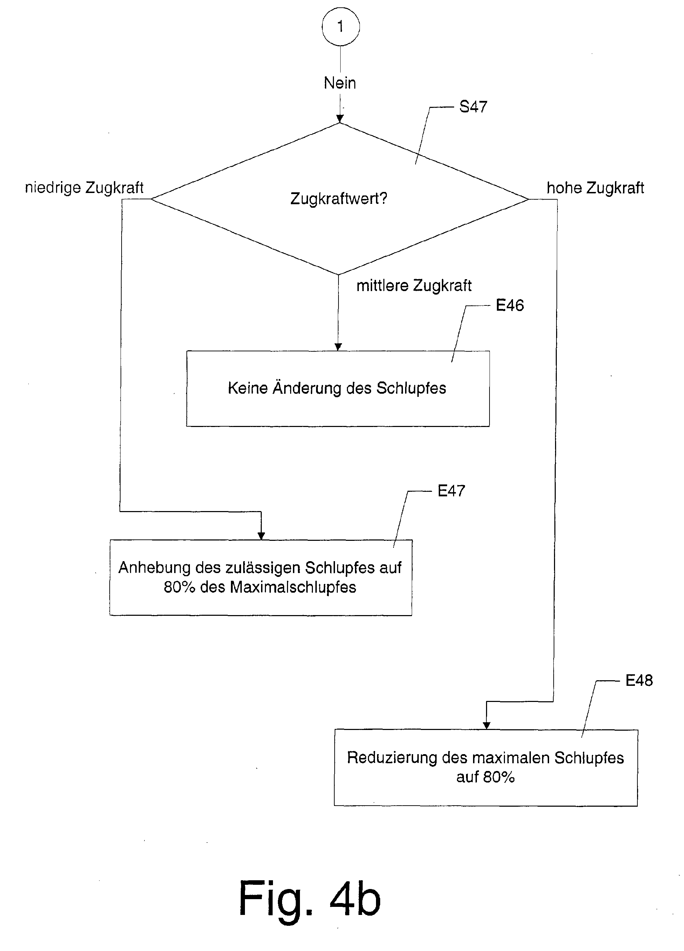

Die vorstehend erwähnte Reduzierung des Schlupfes erfolgt durch eine in der Steuereinrichtung 12 enthaltene Einrichtung zur Schlupfabsenkung, deren Funktion in den Fig. 4a und 4b gezeigt ist. Diese Einrichtung zur Schlupfabsenkung wurde für den Winterbetrieb B_{Winter} eingeführt und reduziert den maximal zulässigen Schlupf. Sie führt hierbei eine Unterscheidung von verschiedenen Zuständen durch, die zu unterschiedlichen Reduzierungen des maximal zulässigen Schlupfes führen. Nachfolgend werden diese Unterscheidungen aufgeführt:
1) Bei Fahrten bis zu einer Geschwindigkeit v von 40 km/h (S41) ist das automatische Sandesystem 10, wie vorstehend bereits diskutiert, ausgeschaltet (S11, E11 in Fig. 3) und es erfolgt keine Reduzierung des maximal zulässigen Schlupfes (E41). Diese Betriebsart ist identisch für Sommer- und Winterbetrieb B_{Sommer} und B_{Winter}.
2) Bei Fahrten mit einer Geschwindigkeit v über 40 km/h (S41) mit eingeschaltetem automatischem Sandesystem 10 (S44, S45) im Winterbetrieb B_{Winter} (S42) wird der Delta-N Grenzwert auf 60% reduziert. Diese Reduzierung erfolgt über eine Rampe, die geschwindigkeitsabhängig ist.
3) Bei Fahrten mit einer Geschwindigkeit v über 40 km/h (S41) mit ausgeschaltetem automatischem Sandesystem 10 (S44, S45) im Winterbetrieb B_{Winter} (S42) besteht aufgrund der Tatsache, dass bei Flugschnee alle Achsen gleichmässig schlechte Bedingungen haben können, eine erhöhte Tendenz zu Allachsschleuern. Daher wird in diesem Fall der Delta-N Grenzwert auf 80% des Maximalwertes reduziert (E44).
4) Bei Fahrten mit einer Geschwindigkeit v über 40 km/h (S41) mit ausgeschaltetem automatischem Sandesystem 10 im Sommerbetrieb Bₛₒₘₘₑᵣ (S42) wird ohne zusätzliche Einschränkungen gefahren (E42).
5) Bei Fahrten mit eingeschaltetem Tempomaten (S44) erfolgt, wenn im Winterbetrieb B_{Winter} gefahren wird (S41, S42), wenn die Sollgeschwindigkeit v_{Soll} erreicht ist (S46), automatisch eine Reduzierung des maximal zulässigen Schlupfes auf 50% (E45). Diese Massnahme bewirkt, dass mit eingeschaltetem Tempomaten der Schlupf möglichst gering gehalten wird, da dies der Zustand ist, der anteilsmässig am häufigsten gefahren wird.
6) Bei Fahrten mit tiefen Zugkräften (S47), d.h. wenn die übertragbare Ist-Zugkraft eines Drehgestells klein ist, erfolgt automatisch eine Anhebung des zulässigen Schlupfes auf 80% des Maximalschlupfes (E47). Diese Massnahme erfolgt vor allem, wenn das automatische Sandesystem 10 ausfällt und ist Drehgestellselektiv.
7) Bei Fahrten mit hohen Zugkräften (S47), d.h. wenn an der Traktionsgrenze grosse Zugkräfte erreicht werden, besteht meistens auch eine erhöhte Tendenz zum Rollieren, da in diesem Zustand die Kraftschlusskurven relativ steil sind. In diesem Fall wird der maximale Schlupf auf 80% reduziert (E48).

In einer weitere bevorzugten Weiterbildung erfolgt die folgenden Modifikation: Bei einem stetigen Betrieb an der Traktionsgrenze wird die Schleuderbremse überdurchschnittlich häufig eingesetzt, so dass Risse auf den Radlaufflächen entstehen können. Um diese Abnutzung zu verhindern, ist in der bevorzugten Weiterbildung der Erfindung zusätzlich eine Einrichtung zur Regelung der Freigabe der Schleuderbremse ausgebildet, die bewirkt, dass diese nur bis 80 km/h freigegeben wird. Im Sommerbetrieb B_{Sommer} wurde funktioniert diese Einrichtung zur Regelung der Freigabe der Schleuderbremse derart, dass zwischen 80 km/h und 120 km/h ein intervallweiser Einsatz der Schleuderbremse möglich ist, wobei die Sperrzeiten zwischen den Einsätzen geschwindigkeitsabhängig geregelt werden, wobei der Energieeintrag ins Rad eine Funktion von Geschwindigkeit und Bremsdruck ist. Im Winterbetrieb B_{Winter} erfolgt überhaupt keine Freigabe für den intervallweisen Einsatz, da die Räder im Winter vermehrt zu Hohllauf tendieren und somit die Gefahr besteht, dass Bremsklötze, die nicht genügend eingeschliffen sind, das Rad lokal überhitzen.

Im Fall von Fahrten mit Tempomat an der Traktionsgrenze entstehen herkömmlich mess- und hörbare Schwingungen. Bei dem Tempomaten handelt es sich um ein adaptives System, das seine Parameter abhängig von der errechneten Zugträgheit einstellt. Da die Trägheit des Zugs in den meisten Fällen wesentlich höher ist als das Trägheitsmoment der rotierenden Masse (Radsatz, Achse, Getriebe und Rotor) und sich die Achsen durch das Fahren im Makroschlupfbereich gegenüber der translatorischen Geschwindigkeit des Zuges frei bewegen können, entsteht eine Schwingung der Achsgeschwindigkeit gegenüber der Zuggeschwindigkeit. Um das Entstehen derartiger Schwingungen zu verhindern, ist in einer Weiterbildung eine weitere Regeleinrichtung ausgebildet, die die Schwingung detektiert und im Falle ihres Vorhandenseins die Dynamik des Tempomaten begrenzt.

Zusammenfassend offenbart die vorliegende Erfindung eine Vorrichtung und ein Verfahren zur Traktionsregelung, mit deren bzw. dessen Hilfe vor allem die Abnutzung der Laufflächen der Räder aufgrund von erhöhtem Schlupf im Winterbetrieb bedeutend verringert wird. Hierzu ist ein automatisches Sandesystem ausgebildet, das ansprechend auf erfasste Witterungs- und Fahrbedingungen geregelt wird und somit eine Verringerung des Schlupfes zur Folge hat.

## Patentansprüche

1. Vorrichtung zur Traktionsregelung für ein mehrachsiges Fahrzeug, mit:
einer Einrichtung zur Detektion der Wetterverhältnisse (1, 1b) zur Detektion, ob eine Sommer- oder eine Winterbetriebsart (B_{Sommer}, B_{Winter}) zu wählen ist, ansprechend auf erfasste Zugkräfte an jeweiligen Achsen und deren Verhalten zueinander, Schlupfgeschwindigkeiten pro Achse, Fahrzeuggeschwindigkeit und eine Aussentemperatur in Verbindung mit vorgehend festgelegten Grenzwerten, und
ein automatisches Sandesystem (10), das ansprechend auf ein Ausgangssignal der Einrichtung zur Detektion der Wetterverhältnisse (1, 1b), ein Einschaltsignal durch einen Fahrzeugführer und erfasste Schlupfgeschwindigkeiten Einrichtungen zum automatischen Sanden (10a, 10b, ..., 10n) aktiviert, um die Kraftschlusscharakteristik steiler zu machen und das Kraftschlussmaximum zu erhöhen.

2. Vorrichtung nach Anspruch 1, wobei
die Einrichtung zur Detektion der Wetterverhältnisse (1, 1b) ein Fuzzy-Control-System (1b) umfasst, das die Entscheidung, ob die Sommer- oder Winterbetriebsart (B_{Sommer}, B_{Winter}) zu wählen ist, anhand von vorgegebenen Regeln mittels einer Fuzzy-Center of Gravity-Methode trifft.

3. Vorrichtung nach Anspruch 1, wobei das Fuzzy-Control-System (1b) die Entscheidung anhand der folgenden vorgegebenen Regeln trifft:
Regel 1) wenn Tₐᵤₛₛₑₙ um 0°C oder tiefer und V_{Schlupfmax} (D_{nach}) > V_{Schlupfmin} (Dᵥₒᵣ), dann B_{Winter},
Regel 2) wenn Tₐᵤₛₛₑₙ um 0°C oder tiefer und F_{2.Achse} > F_{4.Achse}, dann B_{Winter},
Regel 3) wenn Tₐᵤₛₛₑₙ um 0°C oder höher, dann B_{Sommer}, und
Regel 4) wenn v > v₁, F_{Sum} (D_{nach}) > F_{Sum}(Dᵥₒᵣ) und F_{4.Achse} > F_{3.Achse}, dann B_{Sommer},
wobei Tₐᵤₛₛₑₙ die erfasste Aussentemperatur, V_{Schlupfmax} (D_{nach}) die maximale Schlupfgeschwindigkeit am nachlaufenden Drehgestell, v_{Schlupfmin}(Dᵥₒᵣ) die minimale Schlupfgeschwindigkeit am vorlaufenden Drehgestell. F_{2.Achse}, F_{3.Achse} bzw. F_{4.Achse} die Zugkraft an der 2., 3. bzw. 4. Achse in Fahrtrichtung, F_{Sum}(D_{nach}) die Summenzugkraft des nachlaufenden Drehgestells und F_{Sum}(Dᵥₒᵣ) die Summenzugkraft des vorlaufenden Drehgestells bezeichnet,
wobei bei diesen Regeln 1) bis 4) die Entscheidung anhand der Membership-Funktion erfolgt, bei der der ausgegebene Prozentwert anzeigt, zu wieviel Prozent die Bedingung zutrifft.

4. Vorrichtung nach Anspruch 1 oder 2, wobei
weiterhin eine Freigabelogik (2) ausgebildet ist, die entscheidet, ob die Bedingungen vorliegen, für die die Einrichtung zur Detektion der Wetterverhältnisse (1,1b) ausgelegt ist und ansonsten eine Entscheidung blockiert.

5. Vorrichtung nach Anspruch 3, wobei
die Freigabelogik (2) überprüft, ob die Geschwindigkeit über eine vorbestimmten Mindestgeschwindigkeit (vₘᵢₙ) liegt, die Gesamtzugkraft (F_{ges}) über einem vorbestimmten Minimalwert (Fₘᵢₙ) liegt und mindestens zwei Achsen an der Traktionsgrenze fahren, und falls diese Bedingungen nicht erfüllt sind, die Einrichtung zur Detektion der Wetterverhältnisse (1, 1b) blockiert, so dass dann in der Sommerbetriebsart (B_{Sommer}) gefahren wird.

6. Vorrichtung nach einem der vorhergehenden Ansprüche 1 bis 4, wobei
das automatische Sandesystem (10) weiterhin eine Steuereinrichtung (12) aufweist, mittels derer die Einrichtungen zum automatischen Sanden (10a, 10b, ..., 10n) aktivierbar sind und die bei Überschreitung einer ersten Schlupf-Schwelle (V_{Schlupf-th1}) die Einrichtungen zum automatischen Sanden (10a, 10b, ..., 10n) derart ansteuert, dass impulsweise gesandet wird, während bei Überschreitung einer zweiten Schlupf-Schwelle (V_{Schlupf-th2}), die höher als die erste Schlupf-Schwelle (V_{Schlupf-th1}) liegt, die Einrichtungen zum automatischen Sanden (10a, 10b, ..., 10n) derart angesteuert werden, dass ein Dauersanden erfolgt.

7. Vorrichtung nach Anspruch 5, wobei
die Steuereinrichtung (12) die Einrichtungen zum automatischen Sanden (10a, 10b, ..., 10n) derart ansteuert, dass ein Sanden intervallweise erfolgt, wobei das Intervall derart gewählt ist, dass die Kraftschlusscharakteristik nicht zu grosse Sprünge macht.

8. Vorrichtung nach Anspruch 5 oder 6, wobei
die Steuereinrichtung (12) eine Einrichtung zur Schlupfabsenkung aufweist, die den maximal zulässigen Schlupf reduziert.

9. Vorrichtung nach Anspruch 7, wobei
die Einrichtung zur Schlupfabsenkung die folgenden Unterscheidungen und Schlupfreduzierungen durchführt:
a) Wenn v > 40 km/h ist, ist das automatisches Sandesystem ausgeschaltet und der maximal zulässige Schlupf wird nicht reduziert.
b) Wenn v > 40 km/h, das automatische Sandesystem eingeschaltet ist und die Winterbetriebsart B_{Winter} vorliegt, dann wird der Delta-N-Grenzwert durch die Einrichtung zur Schlupfreduzierung auf 60% reduziert.
c) Wenn v > 40 km/h, das automatische Sandesystem ausgeschaltet ist und die Winterbetriebsart B_{Winter} vorliegt, dann wird der Delta-N-Grenzwert durch die Einrichtung zur Schlupfreduzierung auf 80% des Maximalwertes reduziert.
d) Wenn v > 40 km/h, das automatische Sandesystem ausgeschaltet ist und die Sommerbetriebsart B_{Sommer} vorliegt, dann wird ohne zusätzliche Einschränkungen gefahren und die Einrichtung zur Schlupfreduzierung wird nicht tätig.
e) Wenn der Tempomat eingeschaltet ist, der Winterbetrieb BWinter vorliegt und die Sollgeschwindigkeit vSoll erreicht ist, wird das maximal zulässige Schlupf durch die Einrichtung zur Schlupfreduzierung auf 50% reduziert.
f) Bei Fahrten mit niedrigen Zugkräften hebt die Einrichtung zur Schlupfreduzierung den zulässigen Schlupf auf 80% des Maximalschlupfes an.
g) Bei Fahrten mit hohen Zugkräften an der Traktionsgrenze wird der maximale Schlupf durch die Einrichtung zur Schlupfreduzierung auf 80% reduziert.

10. Vorrichtung nach einem der Ansprüche 1 bis 8, weiterhin mit
einer Einrichtung zur Regelung der Freigabe der Schleuderbremse, wobei diese Einrichtung die Schleuderbremse im Sommerbetrieb (B_{Sommer}) nur bis 80 km/h vollständig freigibt, im Geschwindigkeitsbereich zwischen 80 km/h und 120 km/h intervallweise freigibt, wobei dieses Intervall von der Geschwindigkeit abhängt, und im Winterbetrieb (B_{Winter}) eine Freigabe vollständig verhindert.

11. Vorrichtung nach einem der Ansprüche 1 bis 9, weiterhin mit
einer Regeleinrichtung für einen Tempomaten, die eine Schwingung der Achsgeschwindigkeit gegenüber der Fahrzeuggeschwindigkeit detektiert und im Falle ihres Vorhandenseins die Dynamik des Tempomaten begrenzt.

12. Verfahren zur Traktionsregelung für ein mehrachsiges Fahrzeug, mit den Schritten:
Erfassen von Zugkräften an den jeweiligen Achsen und deren Verhalten zueinander, von Schlupfgeschwindigkeiten pro Achse, der Fahrzeuggeschwindigkeit und einer Aussentemperatur,
Wählen einer Sommer- oder Winterbetriebsart je nachdem, welche von vorbestimmten Regeln erfüllt ist,
Aktivieren eines automatischen Sandesystems, nur, wenn ein Einschaltsignal durch einen Fahrzeugführer vorliegt, die Winterbetriebsart gewählt wurde und die Schlupfgeschwindigkeit über einer vorbestimmten ersten Schlupf-Schwelle liegt, Aktivierungen der Einrichtungen zum automatischen Sanden impulsweise, wenn eine erste Schlupf-Schwelle überschritten ist, und fortwährend, wenn eine zweite Schlupf-Schwelle überschritten ist, wobei diese Aktivierung intervallweise erfolgt, wobei das Intervall derart gewählt wird, dass die Kraftschlusscharakteristik nicht zu grosse Sprünge macht,
Absenken des maximal zulässigen Schlupfes, um ein Rollieren zu vermeiden.

13. Verfahren nach Anspruch 12, wobei
in dem Schritt des Wählens einer Sommer- oder Winterbetriebsart die Entscheidung anhand von vorgegebenen Regeln mittels einer Fuzzy-Center of Gravity-Methode getroffen wird.

14. Verfahren nach Anspruch 13, wobei
die folgenden Regeln vorgegebenen Regeln zur Entscheidung verwendet werden:
Regel 1) wenn Tₐᵤₛₛₑₙ < 0°C und v_{Schlupfmax} (D_{nach}) > V_{Schlupfmin} (Dᵥₒᵣ), dann B_{Winter},
Regel 2) wenn Tₐᵤₛₛₑₙ < 0°C und F_{2.Achse} > F_{4.Achse}, dann B_{Winter},
Regel 3) wenn Tₐᵤₛₛₑₙ > 0°C, dann B_{Sommer} und
Regel 4) wenn v > V₁, F_{Sum} (D_{nach}) > F_{Sum}(Dᵥₒᵣ) und F_{4.Achse} > F_{3.Achse}, dann B_{Sommer},
wobei Tₐᵤₛₛₑₙ die erfasste Aussentemperatur, v_{Schlupfmax} (D_{nach}) die maximale Schlupfgeschwindigkeit am nachlaufenden Drehgestell, V_{Schlupfmin}(Dᵥₒᵣ) die minimale Schlupfgeschwindigkeit am vorlaufenden Drehgestell. F_{2.Achse}, F_{3.Achse} bzw. F_{4.Achse} die Zugkraft an der 2., 3. bzw. 4. Achse in Fahrtrichtung, F_{Sum}(D_{nach}) die Summenzugkraft des nachlaufenden Drehgestells und F_{Sum}(Dᵥₒᵣ) die Summenzugkraft des vorlaufenden Drehgestells bezeichnet,
wobei bei diesem Regeln 1) bis 4) die Entscheidung anhand der Membership-Funktion erfolgt, bei der der ausgegebene Prozentwert anzeigt, zu wieviel Prozent die Bedingung zutrifft.

15. Verfahren nach Anspruch 11 oder 12, wobei
eine Aktivierung des automatischen Sandesystems erfolgt, wenn die Geschwindigkeit über einer vorbestimmten Mindestgeschwindigkeit (vₘᵢₙ) liegt, die Gesamtzugkraft (F_{ges}) über einem vorbestimmten Minimalwert (Fₘᵢₙ) liegt und mindestens zwei Achsen an der Traktionsgrenze fahren, und, falls diese Bedingungen nicht erfüllt sind, keine Aktivierung erfolgt und in der Sommerbetriebsart (B_{Sommer}) gefahren wird.

16. Verfahren nach einem der Ansprüche 11 bis 13, wobei
im Schritt des Absenkens des maximalen Schlupfes die folgenden Unterscheidungen und Schlupfreduzierungen erfolgen:
b) Wenn v > 40 km/h, das automatische Sandesystem eingeschaltet ist und die Winterbetriebsart B_{Winter} vorliegt, dann wird der Delta-N-Grenzwert durch die Einrichtung zur Schlupfreduzierung auf 60% reduziert.
c) Wenn v > 40 km/h, das automatische Sandesystem ausgeschaltet ist und die Winterbetriebsart B_{Winter} vorliegt, dann wird der Delta-N-Grenzwert durch die Einrichtung zur Schlupfreduzierung auf 80% des Maximalwertes reduziert.
d) Wenn v > 40 km/h, das automatische Sandesystem ausgeschaltet ist und die Sommerbetriebsart B_{Sommer} vorliegt, dann wird ohne zusätzliche Einschränkungen gefahren und die Einrichtung zur Schlupfreduzierung wird nicht tätig.
e) Wenn der Tempomat eingeschaltet ist, der Winterbetrieb BWinter vorliegt und die Sollgeschwindigkeit vSoll erreicht ist, wird das maximal zulässige Schlupf durch die Einrichtung zur Schlupfreduzierung auf 50% reduziert.
f) Bei Fahrten mit niedrigen Zugkräften hebt die Einrichtung zur Schlupfreduzierung den zulässigen Schlupf auf 80% des Maximalschlupfes an.
g) Bei Fahrten mit hohen Zugkräften an der Traktionsgrenze wird der maximale Schlupf durch die Einrichtung zur Schlupfreduzierung auf 80% reduziert.

17. Verfahren nach einem der Ansprüche 11 bis 14, mit dem weiteren Schritt:
Freigeben der Schleuderbremse im Sommerbetrieb uneingeschränkt bis zu 80 km/h und im Geschwindigkeitsbereich von 80 km/h bis 120 km/h intervallweise, wobei diese Intervall von der Geschwindigkeit abhängt, und Verhindern einer Freigabe der Schleuderbremse im Winterbetrieb.

18. Verfahren nach einem der Ansprüche 11 bis 15, mit dem weiteren Schritt:
im Fall einer Fahrt mit Tempomat Detektieren einer Schwingung der Achsgeschwindigkeit gegenüber der Fahrzeuggeschwindigkeit und im Falle des Vorhandenseins einer Schwingung Begrenzen der Dynamik eines Tempomaten.
